# FASCICULE DE BREVET EUROPEEN

(11) **EP 2 741 466 B1**
(45) Date de publication et mention de la délivrance du brevet: **14.02.2018**
(21) Numéro de dépôt: 13196373.8
(22) Date de dépôt: 10.12.2013
(51) Int. Cl.: H04L 9/32, H04W 4/00, H04W 12/04, H04L 29/06

(54) **PROCÉDÉ ET SYSTÈME DE GESTION D'UN ÉLÉMENT SÉCURISÉ INTÉGRÉ ESE**
Verfahren und System zur Steuerung eines integrierten Sicherheitselements (ESE)
Method and system for managing a built-in secured element eSE

(30) Priorité: 10.12.2012 FR 1261829
(43) Date de publication de la demande: 11.06.2014
(73) Titulaire: OBERTHUR TECHNOLOGIES, 92700 Colombes (FR)
(72) Inventeur: Danree, Arnaud, 92700 Colombes (FR); Larignon, Guillaume, 92700 Colombes (FR)
(74) Mandataire: Santarelli

(56) Documents cités:
- US-A1- 2012 238 206
- ALIMI V ET AL: "Post-Distribution Provisioning and Personalization of a Payment Application on a UICC-Based Secure Element", AVAILABILITY, RELIABILITY AND SECURITY, 2009. ARES '09. INTERNATIONAL CONFERENCE ON, IEEE, PISCATAWAY, NJ, USA, 16 mars 2009 (2009-03-16), pages 701-705, XP031469274, ISBN: 978-1-4244-3572-2

## Description

### DOMAINE DE L'INVENTION

L'invention concerne le domaine des éléments sécurisés intégrés, ou « embedded secure elements » eSE, et plus particulièrement un procédé de gestion de tels éléments sécurisées intégrés, et un système correspondant.

### CONTEXTE DE L'INVENTION

On connaît plusieurs types d'éléments sécurisés utilisés dans des dispositifs hôtes tels que des terminaux mobiles, des téléphones portables intelligents (smartphones), des tablettes numériques, etc.

Un premier type est connu sous l'appellation de carte UICC (Universal Integrated Circuit Card) visée dans la norme ETSI SP 102 221 et regroupe les cartes à puce classiques, type carte SIM (ou USIM - Universal Subscriber Identity Module), mais également des jetons (token) sécurisés.

Un deuxième type, qui intéresse la présente invention, est connu sous l'appellation de « embedded secure element » ou eSE et visé dans la spécification « GlobalPlatform Card Spécification Version 2.2.1 » relative à la technologie GlobalPlatform.

Ces deux types d'éléments sécurisés disposent de moyens ou mécanismes de sécurisation interne pour assurer l'intégrité et la sécurité de données sensibles et services sensibles qu'ils hébergent.

Une différence essentielle entre ces deux types d'éléments sécurisés réside dans l'autonomie qu'ils ont pour établir une connexion avec un équipement distant, typiquement un serveur OTA (Over-The-Air) externe au dispositif hôte.

La carte UICC dispose de moyens maître dans l'établissement d'une telle connexion. En d'autres termes, une application de la carte UICC peut prendre l'initiative d'un tel établissement, en s'appuyant par exemple sur des capacités disponibles dans le dispositif hôte (par exemple les outils SIM TooIKits). On dit que le carte UICC est un élément sécurisé « connecté ».

Une carte UICC peut envoyer de sa propre initiative un SMS à un serveur OTA pour initier une telle connexion. A titre d'illustration, la publication EP 2 453 377 décrit une UICC dont un agent administrateur est capable de gérer un serveur OTA via une connexion HTTP.

L'élément sécurisé intégré eSE est, quant à lui, un élément esclave d'applications résidentes sur le dispositif hôte, c'est-à-dire esclave dans une relation maître-esclave dans les couches hautes du modèle OSI, notamment dans la couche applicative (couche 7), voire dans les couches 5 et 6. Ainsi l'établissement d'une connexion avec l'extérieur nécessite une application résidente sur le dispositif hôte, laquelle est seule à prendre l'initiative dans cet établissement. C'est cette application qui décide de mettre en relation l'eSE avec un serveur externe.

A titre d'exemple, l'eSE peut former l'élément sécurisé nécessaire à de nombreux usages ou services reposant sur une communication NFC (Near Field Communication) mis en oeuvre par un terminal mobile hôte. Par exemple, un service de paiement NFC nécessite des informations bancaires secrètes de l'utilisateur qui sont avantageusement stockées dans l'eSE, à l'abri de tout accès intempestif.

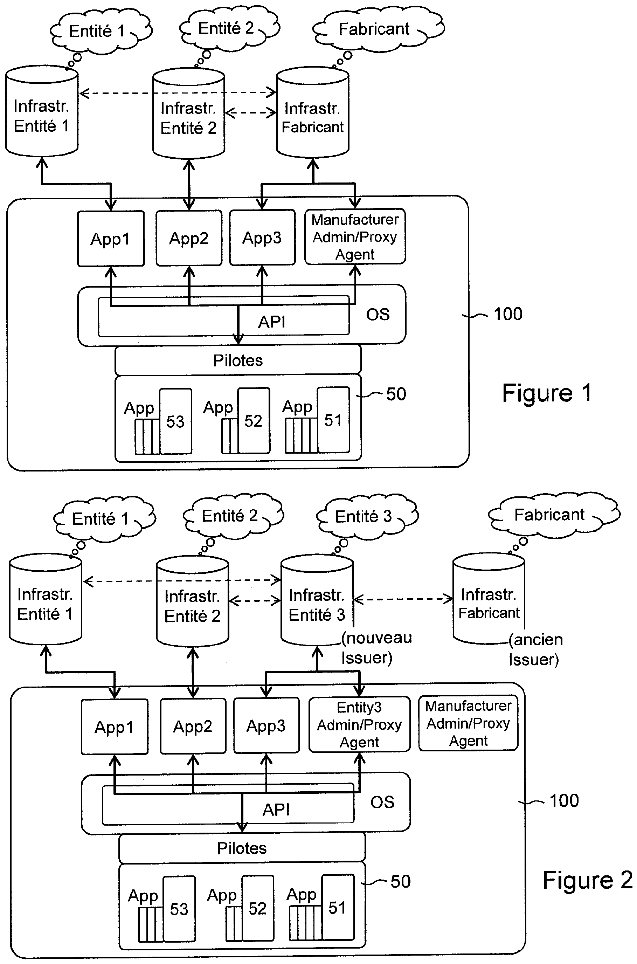

La **Figure 1** illustre une architecture logique d'un eSE 50 et d'un dispositif hôte 100 l'intégrant, conformes à la technologie GlobalPlatform.

L'eSE 50 comprend un système d'exploitation OS_{eSE}, un domaine de sécurité principal ou «racine» 51, noté ISD pour Issuer Security Domain, et des applications App accessibles via l'ISD 51. D'autres domaines de sécurité 52, 53 (supplementary security domains, SSD) de priorité moindre à l'ISD 51 peuvent également être prévus avec leurs applications App.

L'ISD 51 est nécessaire au sein de l'eSE pour permettre une administration de l'élément sécurisé eSE et notamment la gestion des autres domaines de sécurité. Cela permet par exemple au possesseur/propriétaire de l'ISD 51 de sous-louer une partie de l'eSE ou d'en partager le contrôle avec d'autres partenaires, par exemple commerciaux, en leur installant des domaines de sécurité propres.

Comme l'eSE est un équipement esclave d'applications résidentes du dispositif hôte 100 fournissant à un utilisateur final des services (App1, App2, App3), la technologie GlobalPlatform définit l'interface entre ces applications résidentes et l'eSE. Elle définit notamment l'API (Application Programming Interface) prévue dans le dispositif hôte pour accéder l'eSE via des pilotes logiciels (drivers).

Des exemples d'applications App1, App2, App3 incluent des applications de paiement mobile, des applications de ticket de transport (transport ticketing), des applications de contrôle d'accès, des applications de péage, etc. A noter que des mécanismes internes à l'eSE (notamment les ACF - Access Control Function) permettent d'associer les applications résidentes à chaque domaine de sécurité de l'eSE.

Chaque domaine de sécurité détient un jeu de clés cryptographiques, généralement au moins trois clés, qui sont utilisées pour la mise en oeuvre de communications sécurisées avec des serveurs d'une infrastructure externe qui détiennent également ces clés ou des clés correspondantes (cas de clés assymétriques), mais également pour la gestion sécurisée de contenus dans l'eSE par ces serveurs externes, par exemple la gestion de clés internes, le cryptage/décryptage, le contrôle du séquencement de commandes APDU, etc. pour sécuriser l'accès à des données et services internes à l'eSE.

Par conséquent, il existe pour chaque domaine de sécurité de l'eSE une infrastructure ou entité externe qui détient les clés associées à ce domaine de sécurité. Ces entités externes mettent ainsi à disposition des utilisateurs finaux des applications à installer sur le terminal hôte et qui interagiront avec l'eSE pour fournir des services.

L'ISD 51 est rattaché à l'émetteur ou possesseur ou propriétaire de l'eSE, à savoir généralement le fabricant du dispositif hôte 100. Les SSD sont rattachés aux partenaires commerciaux du fabricant, à savoir Entité1 et Entité2.

Pour assurer l'administration sécurisée de l'eSE, l'émetteur ou possesseur ou propriétaire (Issuer) dispose d'un représentant applicatif au sein du dispositif hôte. Ce représentant est mis en oeuvre par un agent applicatif résident sur le dispositif hôte permettant l'établissement entre des serveurs d'administration de l'Issuer et l'ISD 51 de l'eSE. Cet agent applicatif est connu sous la dénomination d'agent administrateur ou « Admin agent » selon la spécification « GPD_SPE_008 - Secure Element Remote Application Management » et est configuré pour se connecter à un ou plusieurs serveurs d'administration gérés par l'Issuer. Il est également d'usage de le nommer « Proxy agent » car il met en relation (fonction proxy) ces serveurs d'administration avec le domaine de sécurité racine ISD 51 de l'eSE. Pour la suite, il sera essentiellement fait référence à un « Admin/Proxy Agent ».

### RESUME DE L'INVENTION

Afin d'améliorer l'offre de services pour un dispositif hôte, il est désormais envisagé de transférer la gestion administrative de l'eSE de l'Issuer initial à une autre entité externe qui devient le nouveau « Issuer » de l'eSE, par exemple un partenaire local (à l'échelle d'un pays, d'une région par exemple) susceptible de fournir des services locaux adaptés. Ce transfert de gestion administrative est généralement concourant à un transfert de propriété de l'eSE.

A noter que la propriété de l'eSE peut être multiple, c'est-à-dire détenue par plusieurs entités externes, auquel cas plusieurs jeux respectifs de clés cryptographiques sont prévus dans le domaine de sécurité racine 51.

La gestion administrative de l'eSE peut être transférée à nouveau ultérieurement. Ainsi plusieurs transferts peuvent se produire sur le même eSE pendant sa durée de vie.

Le transfert de gestion administrative consiste techniquement à transférer le jeu de clés cryptographiques du domaine de sécurité racine 51 à l'entité externe nouvellement « Issuer ». Ce dernier utilise généralement les privilèges administrateur nouvellement acquis pour modifier ce jeu de clés. Dans une variante, un nouveau jeu de clés cryptographiques est créé puis chargé dans l'ISD 51 en remplacement de l'ancien jeu. Le nouveau jeu de clés est communiqué au nouveau propriétaire. Le chargement peut être effectué par un tiers de confiance appelé Certificate Authority (CA) défini par GlobalPlatform qui possède un domaine de sécurité dans l'eSE appelé CASD. Comme décrit dans GlobalPlatform, le nouveau jeu de clé est chiffré par le jeu de clés du CASD pour être transmis de manière confidentielle dans l'eSE.

Le nouveau Issuer doit alors installer, dans le dispositif hôte 100, un Admin/Proxy Agent qui lui est propre afin d'accéder à l'eSE et de l'administrer via l'ISD 51. La nécessité d'avoir recours à un nouvel Admin/Proxy Agent peut par exemple résulter de spécificités protocolaires liées aux serveurs d'administration de ce nouveau Issuer.

La **Figure 2** montre ce contexte où une application App4 du nouveau propriétaire a également été installée pour offrir aux utilisateurs finaux un service qui lui est propre. Les deux Admin/Proxy Agents de l'ancien Issuer et du nouveau Issuer coexistent ainsi dans le dispositif hôte 100.

Un problème survient lorsque le dispositif hôte 100 est le lieu d'une réinitialisation (reset), volontaire ou automatique. Cette réinitialisation peut être due par exemple à la vente du dispositif hôte ou à des problèmes logiciels nécessitant une réinstallation complète, mais peut également survenir à la suite d'un vol du dispositif hôte.

Des mécanismes de sécurité doivent donc être définis pour empêcher l'accès et l'utilisation des données et services sensibles de l'eSE.

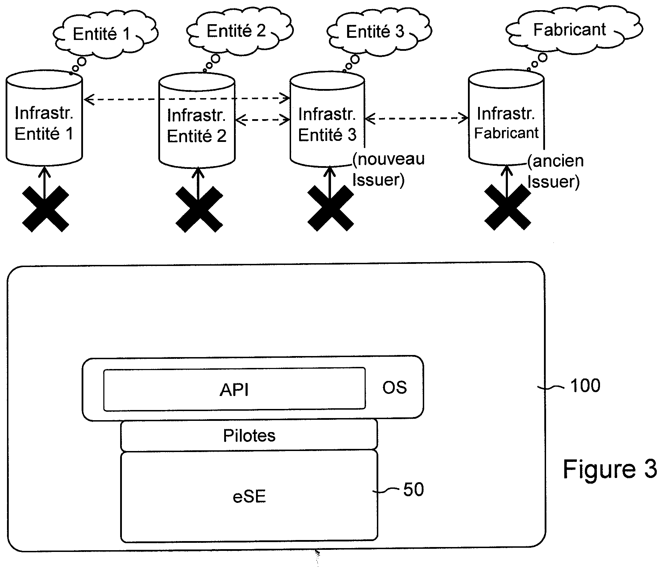

Or, la réinitialisation du dispositif hôte conduit à la suppression de l'ensemble des applications résidentes, à l'exception de l'OS. Les deux Admin/Proxy Agents sont donc supprimés. Il n'est donc plus possible d'administrer l'eSE depuis l'infrastructure du nouveau Issuer, car on le rappelle l'eSE ne peut initier une connexion de son propre chef. L'eSE est ainsi rendu inutilisable comme montré par les croix sur la **Figure 3****.**

La présente invention a ainsi pour objet de pallier au moins un de ces inconvénients, afin notamment de sécuriser l'utilisation de l'élément sécurisé intégré lorsqu'il est de type non connecté.

Dans ce contexte, un premier aspect de l'invention concerne un procédé de gestion d'un élément sécurisé intégré, eSE, dans un dispositif hôte, l'élément sécurisé intégré étant uniquement accessible comme esclave d'au moins une application résidente du dispositif hôte dans une relation maître-esclave, et l'élément sécurisé intégré incluant un domaine de sécurité racine, ISD, auquel est associé un jeu de clés pour mettre en oeuvre des mécanismes de sécurité (jeu détenu par une entité externe, l'Issuer courant, que l'on cherche à retrouver), le procédé comprenant les étapes suivantes :
transmettre un message incluant un identifiant de l'élément sécurisé intégré eSE, depuis un agent applicatif intégré à un système d'exploitation du dispositif hôte à destination d'une première entité externe au dispositif hôte et renseignée dans l'agent applicatif ;
déterminer une deuxième entité externe au dispositif hôte (différente de la première entité externe) détentrice du jeu de clés associé au domaine de sécurité racine.

Le procédé de gestion selon l'invention contribue à la sécurité de l'eSE dans la mesure où il permet de retrouver l'entité externe propriétaire de celui-ci (l'Issuer actuel), c'est-à-dire la seule à avoir les privilèges d'administration totale de l'eSE via l'ISD, et ce malgré la disparition de son Admin/Proxy Agent au sein du dispositif hôte. Des actions sur l'eSE pourront ainsi être prises comme décrit par la suite, notamment s'il s'avère que cet élément sécurisé intégré a été volé.

L'efficacité de ce procédé repose notamment sur l'intégration d'un agent applicatif, l'Admin/Proxy Agent, au sein même du système d'exploitation du dispositif hôte. De préférence, il s'agit de l'agent applicatif de fabricant car c'est lui qui élabore généralement le système d'exploitation. En effet, cette configuration permet de conserver cet agent applicatif malgré la réinitialisation du dispositif hôte et de l'utiliser dans le processus d'identification de l'Issuer actuel grâce à son lien avec le fabricant (la première entité externe).

Comme décrit plus en détail par la suite, ce sont des informations de transfert de propriété ou de droits d'administration sur l'élément sécurisé qui vont permettre par exemple d'identifier le nouveau Issuer (la deuxième entité externe). Notamment la détermination du nouveau Issuer va pouvoir être connue grâce à une ou plusieurs bases de données dédiées à mémoriser les informations de transfert de propriété ou de droits d'administration sur l'eSE.

Corrélativement, un deuxième aspect de l'invention concerne un système de gestion d'un élément sécurisé intégré, eSE, dans un dispositif hôte, l'élément sécurisé intégré étant uniquement accessible comme esclave d'au moins une application résidente du dispositif hôte dans une relation maître-esclave, et l'élément sécurisé intégré incluant un domaine de sécurité racine, ISD, auquel est associé un jeu de clés pour mettre en oeuvre des mécanismes de sécurité, le système comprenant :
un agent applicatif intégré à un système d'exploitation du dispositif hôte et configuré pour transmettre un message incluant un identifiant de l'élément sécurisé intégré eSE, à destination d'une première entité externe au dispositif hôte et renseignée dans l'agent applicatif ; et
la première entité (l'Issuer initial) externe au dispositif hôte telle que renseignée dans l'agent applicatif, et configurée pour déterminer une deuxième entité externe au dispositif hôte détentrice du jeu de clés associé au domaine de sécurité racine.

Le système présente des avantages similaires au procédé selon l'invention.

D'autres caractéristiques du procédé et du système selon des modes de réalisation sont décrites dans les revendications dépendantes.

Par exemple, dans un mode de réalisation, le procédé comprend en outre transmettre le message reçu depuis la première entité externe à destination de la deuxième entité externe déterminée; et vérifier par ladite deuxième entité externe que celle-ci est détentrice du jeu de clés associé au domaine de sécurité racine à partir du message reçu.

Cette disposition offre un degré supplémentaire de sécurité pour retrouver l'Issuer courant de l'eSE, car la deuxième entité externe (c'est-à-dire l'entité déterminée comme prétendu Issuer courant) vérifie elle-même être la détentrice des clés de cryptage à l'aide du message émis par l'agent applicatif intégré au dispositif hôte.

Dans un mode de réalisation, transmettre le message vers la deuxième entité externe est effectué de proche en proche, une entité externe recevant le message le transmettant vers une entité externe destinataire renseignée, dans une base de données locale à l'entité externe réceptrice, comme successeur à l'entité externe réceptrice dans la détention du jeu de clés associé audit domaine de sécurité racine.

Cette configuration permet de remonter la chaîne de détention/propriété de l'eSE depuis l'Issuer initial (le fabricant) jusqu'à l'Issuer actuel, sans avoir recours à des équipements autres que l'infrastructure propre à chacun de ces Issuers successifs.

Dans un autre mode de réalisation, déterminer une deuxième entité externe comprend :
émettre, par la première entité externe, une requête à un serveur central pour obtenir un identifiant de la deuxième entité externe, la requête identifiant l'élément sécurisé intégré.

Cette disposition permet d'accéder directement à l'entité externe prétendument propriétaire/Issuer actuel de l'élément sécurisé intégré. La vérification prévue à l'aide du message reçu permet de confirmer l'information de propriété mémorisée dans le serveur central. Ce mode de réalisation s'avère plus rapide que le précédent mode de réalisation dans le cas où la chaîne de détention/propriété de l'eSE est particulièrement longue.

Dans un autre mode de réalisation, déterminer une deuxième entité externe et transmettre le message reçu vers la deuxième entité externe comprennent :
émettre une notification par la première entité externe à un serveur central, ladite notification identifiant l'élément sécurisé intégré ;
au niveau du serveur central, identifier localement la deuxième entité externe à partir de l'identifiant de l'élément sécurisé intégré indiqué dans la notification, et émettre une deuxième notification à la deuxième entité externe telle qu'identifiée localement ;
à l'initiative de la deuxième entité externe telle qu'identifiée localement, établir une connexion entre cette deuxième entité externe et la première entité externe de sorte à recevoir de cette dernière ledit message.

Cette disposition permet également de s'affranchir des longues chaînes de détention/propriété et permet de soulager la première entité externe (généralement l'infrastructure du fabricant de dispositifs hôtes) en cas de réception d'un grand nombre de messages. En effet, dans ce mode de réalisation, une partie du bouclage entre cette première entité et l'entité actuellement propriétaire de l'élément sécurisé intégré est déportée sur le serveur central et sur cette dernière entité externe.

Dans un autre mode de réalisation, l'élément sécurisé intégré (par exemple au niveau de l'ISD) comprend, en mémoire, un champ de données pour mémoriser l'identification d'une entité externe détentrice du jeu de clés associé audit domaine de sécurité racine, ledit champ de données étant mis à jour lorsque l'entité externe détentrice du jeu de clés change, et
l'agent applicatif récupère l'identification d'entité externe indiquée dans le champ de données de l'élément sécurisé intégré et transmet cette identification à la première entité externe de sorte que cette dernière établit une connexion avec la deuxième entité externe à l'aide de cette identification pour lui transmettre ledit message.

Cette configuration permet à la fois de s'affranchir du serveur central et des lenteurs qui peuvent résulter d'une longue chaîne de détention/propriété.

Dans un mode de réalisation, le procédé comprend en outre les étapes suivantes, au niveau de l'agent applicatif intégré au système d'exploitation du dispositif hôte :
transmettre, au domaine de sécurité racine ISD de l'élément sécurisé intégré eSE, un premier message généré par l'agent applicatif ;
en réponse, recevoir un message chiffré par au moins une clé du jeu de clés associé au domaine de sécurité racine ;
procédé dans lequel les messages transmis aux première et deuxième entités externes incluent le message chiffré, et la vérification par la deuxième entité externe est effectuée à partir du message chiffré reçu et d'au moins une clé mémorisée dans la deuxième entité externe.

Cette disposition offre un nouveau degré supplémentaire de sécurité pour retrouver l'Issuer courant de l'eSE, car la validation par la deuxième entité externe repose sur un message chiffré à l'aide d'une clé de chiffrement propre à l'eSE.

La vérification peut par exemple consister à déchiffrer le message reçu à l'aide de la clé détenue localement pour s'assurer bien détenir les clés correspondant à l'eSE. De façon opposée, elle peut consister à chiffrer une donnée connue (celle ayant servie à l'eSE pour générer le message chiffré) à l'aide de la clé détenue puis à comparer le résultat au message chiffré reçu.

Dans un mode de réalisation, le procédé comprend une étape préalable de réinitialisation du dispositif hôte (conduisant par exemple à l'effacement de toute donnée dans le dispositif hôte sauf du système d'exploitation), et dans lequel l'étape de transmission du premier message au domaine de sécurité racine par l'agent applicatif est déclenchée au redémarrage du dispositif hôte consécutivement à la réinitialisation.

Cette disposition permet la mise en oeuvre de l'invention dès une réinitialisation du dispositif hôte, car cette dernière est généralement réalisée après le vol d'un équipement. La sécurisation de l'élément sécurisé selon l'invention est donc rendu aussi efficace que possible à l'encontre des vols.

Selon une caractéristique particulière, la réinitialisation du dispositif hôte déclenche une réinitialisation de l'élément sécurisé intégré par l'envoi d'une commande appropriée par le système d'exploitation du dispositif hôte. En particulier, la réinitialisation de l'élément sécurisé intégré comprend le passage automatique de celui-ci dans un état bloqué dans lequel les fonctionnalités de l'élément sécurisé intégré sont réduites.

Ces dispositions permettent de sécuriser l'eSE contre l'accès à ses services ou les données sensibles qu'il stocke.

Selon une autre caractéristique particulière, le premier message transmis par l'agent applicatif inclut une valeur aléatoire générée par l'agent applicatif, le message chiffré inclut un cryptogramme correspondant à la valeur aléatoire chiffrée par l'élément sécurisé intégré à l'aide d'au moins une clé du jeu de clés associé au domaine de sécurité racine, et les messages transmis aux première et deuxième entités externes incluent la valeur aléatoire générée et le cryptogramme correspondant.

Cette disposition offre encore un nouveau degré supplémentaire de sécurité pour retrouver l'Issuer courant de l'eSE, car elle permet notamment d'authentifier l'eSE.

Selon une autre caractéristique particulière, le procédé comprend en outre, au niveau de la deuxième entité externe : authentifier l'élément sécurisé intégré à l'aide du message chiffré et des clés en possession ; et en cas d'échec d'authentification pour une pluralité de messages chiffrés émis pas l'élément sécurisé intégré, exécuter au moins une action protectrice.

Cette disposition a notamment vocation à détecter un éventuel déni de service par l'utilisation d'un faux eSE. Une action protectrice peut par exemple consister à ajouter ledit élément sécurisé intégré dans une liste noir (blacklist) d'eSE à exclure.

Selon une autre caractéristique particulière, le domaine de sécurité racine comprend une pluralité de jeux de clés détenus par une pluralité respective d'entités externes, et le message chiffré résulte de la concaténation d'une donnée (e.g. la valeur aléatoire ci-dessus) chiffrée par chacun des jeux de clés du domaine de sécurité racine.

Cette configuration permet d'utiliser une seule information de sécurité (message chiffré ou cryptogramme) permettant l'identification de un ou plusieurs co-Issuers ou co-propriétaires de l'eSE.

Dans un mode de réalisation, lorsque la vérification est positive (la deuxième entité externe est bien détentrice du jeu de clés de l'ISD), la deuxième entité externe envoie, à l'élément sécurisé intégré, une commande de modification d'un état interne à l'élément sécurisé intégré, via la première entité externe et l'agent applicatif. Cette disposition permet d'agir de façon sécuritaire sur l'eSE alors même que l'Issuer courant (la deuxième entité) ne dispose pas d'un canal de communication propre avec l'eSE (son Admin ou Proxy Agent ayant été supprimé par une réinitialisation par exemple).

En particulier, la deuxième entité externe obtient un statut du dispositif hôte, et la commande de modification d'un état interne à l'élément sécurisé intégré est fonction dudit statut obtenu. Par exemple, la commande passant l'eSE dans un état de fin de vie (« TERMINATED » selon GlobalPlatform) est émise lorsque le dispositif hôte est dans un statut « volé » ou « perdu ». Par contre, la commande émise passe l'eSE dans un état débloqué (« SECURED » selon GlobalPlatform) lorsque le statut obtenu pour le dispositif hôte confirme que ce dernier n'a pas été volé ni perdu.

Dans un mode de réalisation, le procédé comprend les étapes suivantes :
installer, dans le dispositif hôte, un deuxième agent applicatif différent de l'agent applicatif intégré, le deuxième agent applicatif étant configuré pour se connecter à la deuxième entité externe ;
supprimer le deuxième agent applicatif du dispositif hôte par un utilisateur; et
notifier la suppression du deuxième agent applicatif à la deuxième entité externe par le système d'exploitation du dispositif hôte.

Grâce à cette disposition, l'Issuer courant est informé de la suppression de son agent applicatif essentiel pour administrer l'eSE et peut donc entreprendre des démarches idoines pour rétablir une situation fonctionnelle, notamment en incitant l'utilisateur à recharger et réinstaller cet agent applicatif. Plusieurs mécanismes tels que décrits plus loin permettre de détecter la suppression et ainsi de déclencher la notification de suppression.

### BREVE DESCRIPTION DES FIGURES

D'autres particularités et avantages de l'invention apparaîtront encore dans la description ci-après, illustrée par les dessins ci-joints, dans lesquels :
- La **Figure 1** illustre une architecture logique d'un eSE et d'un dispositif hôte l'intégrant, conformes à la technologie GlobalPlatform ;
- La **Figure 2** illustre la même architecture logique lorsque les droits d'administration sur l'eSE ont été transférés à un nouveau propriétaire ;
- La **Figure 3** illustre la situation de cet eSE et du dispositif hôte de la **Figure 2** suite à une réinitialisation usine de ce dernier ;
- La **Figure 4** représente, sous forme de logigramme, des étapes d'un procédé selon l'invention lorsque le dispositif hôte est réinitialisé par un utilisateur ;
- La **Figure 4a** illustre les échanges de messages entre les divers intervenants mis en oeuvre dans des étapes de la **Figure 4** ;
- La **Figure 5** illustre une architecture logique de l'eSE et du dispositif hôte l'intégrant lors de l'étape initiale de la **Figure 4** ;
- La **Figure 6** illustre cette même architecture logique suite à une réinitialisation usine du dispositif hôte ;
- La **Figure 7** illustre la détermination du propriétaire courant de l'eSE et l'authentification de l'eSE par celui-ci, selon un premier mode de réalisation ;
- La **Figure 8** illustre la détermination du propriétaire courant de l'eSE et l'authentification de l'eSE par celui-ci, selon un deuxième mode de réalisation ;
- La **Figure 9** illustre la détermination du propriétaire courant de l'eSE et l'authentification de l'eSE par celui-ci, selon un troisième mode de réalisation ; et
- La **Figure 10** illustre la détermination du propriétaire courant de l'eSE et l'authentification de l'eSE par celui-ci, selon un quatrième mode de réalisation.

### DESCRIPTION DETAILLEE DE L'INVENTION

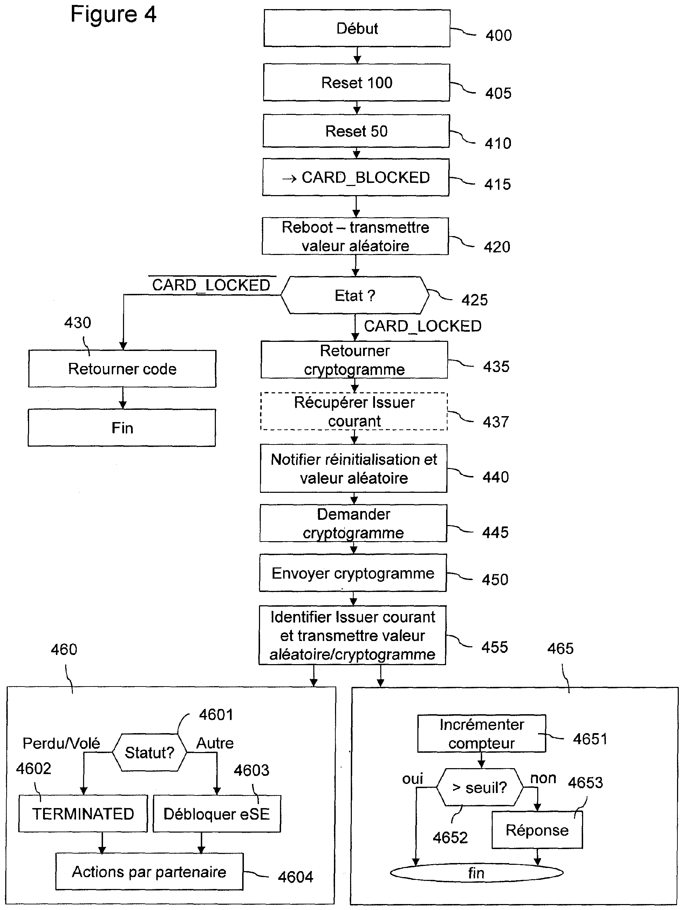

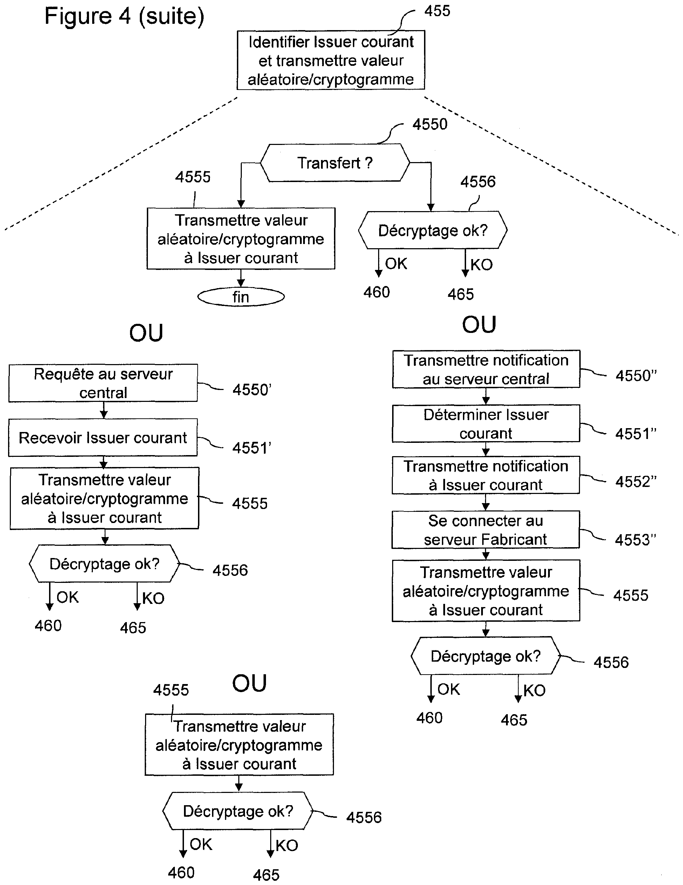

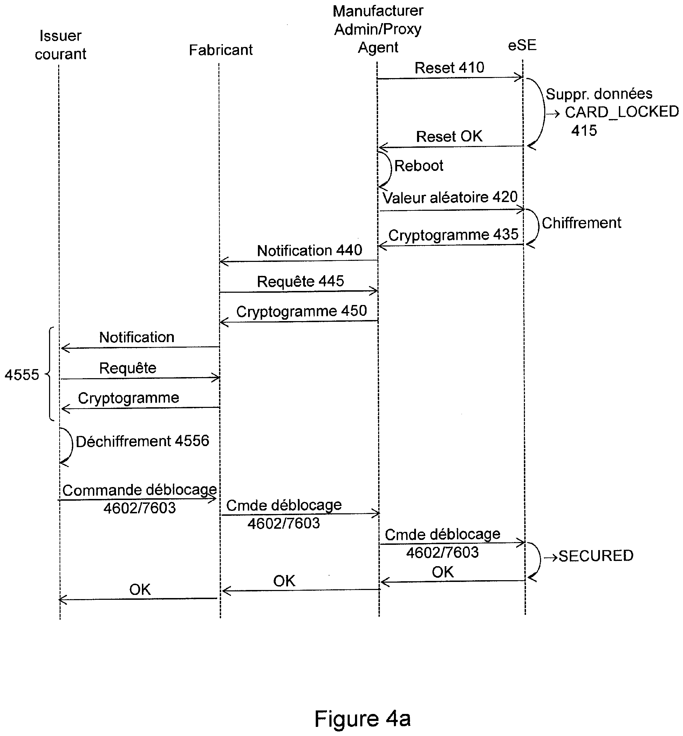

La **Figure 4** représente, sous forme de logigramme, des étapes d'un procédé selon l'invention dans un mode de réalisation où le dispositif hôte 100 est réinitialisé par un utilisateur de celui-ci. Cette réinitialisation est notamment réalisée à l'aide d'une fonction sélectionnée par l'utilisateur dans un sous-menu du dispositif.

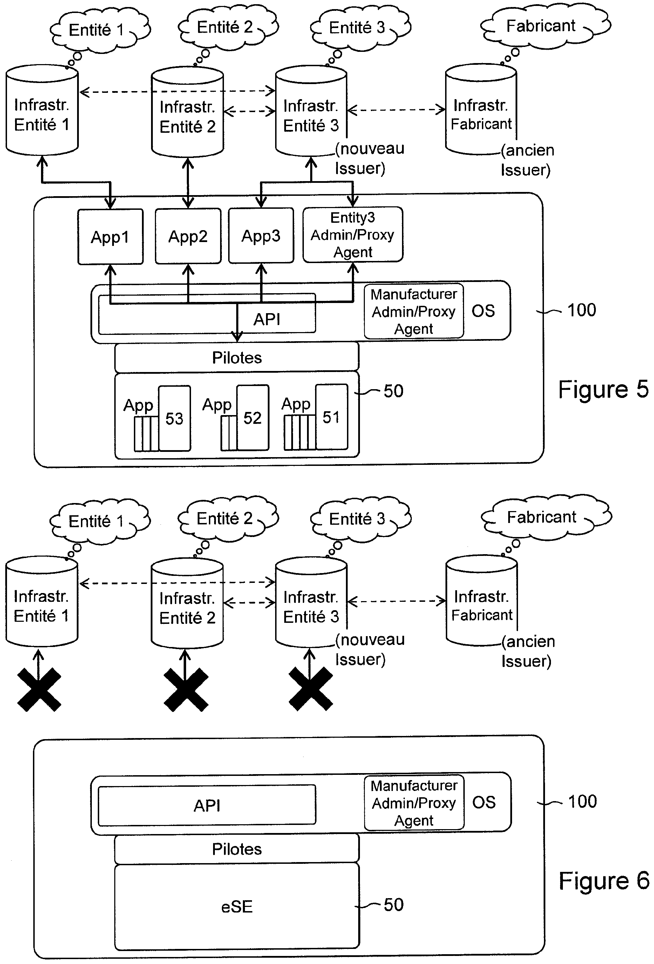

La **Figure 5** illustre une architecture logique d'un élément sécurisé intégré, eSE, 50 et du dispositif hôte 100 l'intégrant, avant la réinitialisation.

L'élément sécurisé intégré eSE est de type non connecté, c'est-à-dire qu'il est esclave d'une ou plusieurs applications résidantes du dispositif hôte 100.

Lors de la fabrication du dispositif hôte 100, l'Issuer initial de l'eSE (le fabricant du dispositif hôte par exemple) intègre l'agent applicatif, Manufacturer Admin/Proxy Agent, à l'intérieur du système d'exploitation OS de ce dispositif hôte 100.

Le Manufacturer Admin/Proxy Agent est l'agent applicatif qui permet à son gestionnaire, ici le fabricant, d'accéder à l'eSE 50 avec un privilège d'administrateur. Cet accès requiert notamment la détention et l'utilisateur de clés de cryptage correspondant au jeu de clés du domaine de sécurité racine (ISD pour Issuer Security Domain) 51 de l'eSE. L'accès administrateur permet par exemple à des équipements (serveurs) de l'infrastructure du fabricant d'accéder à et de modifier des données sensibles à l'intérieur de l'eSE, de créer des domaines de sécurité secondaires pour des partenaires commerciaux, etc.

Durant la vie de l'eSE, des applications sont mises à dispositions par les plateformes de téléchargement (store) de l'Issuer et des entités externes Entité 1, Entité 2 correspondant aux partenaires. Des applications App1, App2, App3 sont ainsi chargées et installées sur le dispositif hôte 100 pour fournir des services à l'utilisateur final, avec l'aide de l'eSE (pour des données/services sécurisés) et des serveurs de l'infrastructure de ces entités externes.

Les applications App1, App2, App3 accèdent aux services et données sensibles de l'eSE 50 au travers de l'API GlobalPlatform.

Le propriétaire ou Issuer initial de l'eSE 50 (fabricant du dispositif hôte par exemple) cède ses droits de propriété et d'administration sur l'eSE à une entité externe (nouveau Issuer) qui peut lui aussi céder ses droits à une autre entité externe, etc. Ces entités externes peuvent être des partenaires commerciaux du fabricant. Sur la Figure, seul le propriétaire/Issuer courant (le dernier à avoir acquis les droits) est représenté par l'Entité 3.

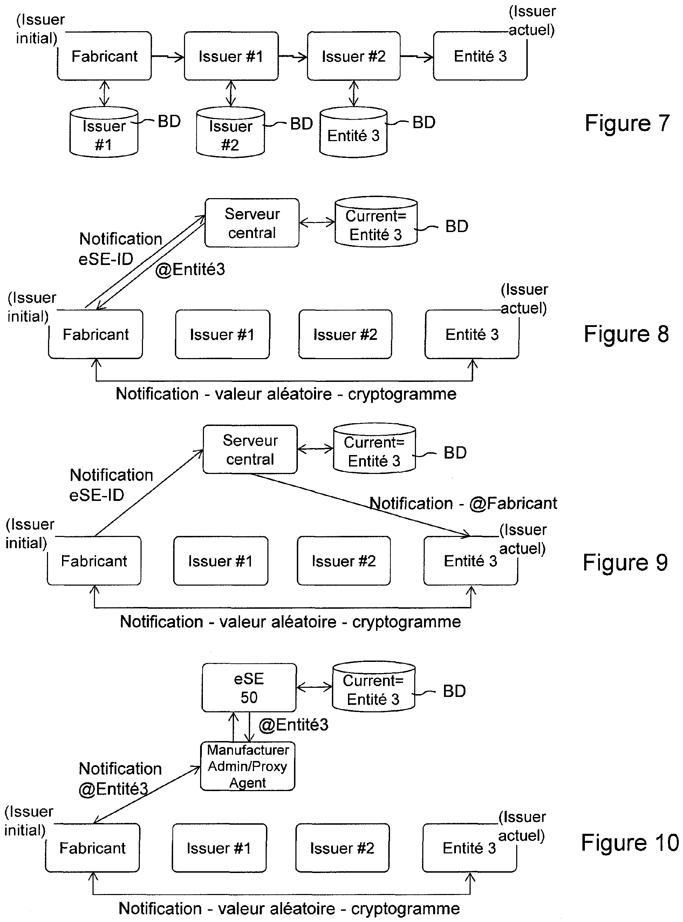

Des informations relatives à la cession de ces droits sont mémorisées afin de permettre ultérieurement, et selon l'invention, de retrouver l'Issuer actuel de l'eSE 50. Divers modes de réalisation sont envisagés comme décrits par le suite en référence aux **Figures 7** à **10****.** Notamment, chaque Issuer qui cède ses droits peut renseigner, dans une base de données locale, l'Issuer suivant à qui il a cédé ses droits d'administration sur l'eSE (**Figure 7**). En variante, un serveur central peut être prévu auquel chaque Issuer qui cède ses droits communique l'identité du nouvel Issuer à qui il a cédé ses droits d'administration sur l'eSE (**Figures 8** et **9****).** Enfin, dans une autre variante, l'identité de l'Issuer courant peut être mémorisée dans un champ de données dédié en mémoire de l'eSE. Ce champ est donc mis à jour à chaque transfert des droits d'administration, c'est-à-dire à chaque transfert du jeu de clés associé à l'ISD 51 **(****Figure 10****).**

Pour accéder à l'eSE avec sa propre infrastructure (ses serveurs d'administration), l'Entité 3 fait charger et installer un Admin/Proxy Agent qui lui est propre, Entity3 Admin/Proxy Agent. Cet agent applicatif interagit, via un réseau de communication type réseau de téléphonie mobile, avec l'infrastructure de l'Entité 3 de la même façon que le Manufacturer Admin/Proxy Agent avec l'infrastructure du fabricant.

La **Figure 5** correspond à l'état du dispositif hôte 100 et de l'eSE 50 lors de l'étape initiale 400 de la **Figure 4****.**

A l'étape 405, l'utilisateur déclenche une réinitialisation du dispositif hôte.

Cette réinitialisation a pour effet d'effacer l'ensemble des données et applications chargées et installées sur le dispositif hôte 100, à l'exception du système d'exploitation OS, pour remettre le dispositif hôte 100 dans l'état qui était le sien à la sortie de l'usine. Il s'agit d'une réinitialisation usine. Cette réinitialisation comprend donc l'effacement des applications App1, App2, App3 ainsi que de l'agent applicatif Entity3 Admin/Proxy Agent.

Comme montré sur la **Figure 6****,** le dispositif hôte ne comprend plus que l'OS dans son état d'origine avec le Manufacturer Admin/Proxy Agent et l'API GlobalPlatform. Les applications App et les autres Admin/Proxy Agents ont été supprimés.

A l'étape 410, l'OS du dispositif hôte 100 envoie une notification de réinitialisation à l'eSE 50, en réponse à la commande d'initialisation reçue de l'utilisateur. Cet envoi est effectué par le Manufacturer Admin/Proxy Agent à destination du domaine de sécurité racine 51 de l'eSE. Les mécanismes ACF internes à l'eSE autorisent en effet toujours l'agent applicatif Manufacturer Admin/Proxy Agent à envoyer des données/messages/notifications à l'ISD 51. Pour rappel, l'ACF vérifie qu'une empreinte (hash) d'une application mobile (ici le hash du certificat de l'agent applicatif) est bien associée à l'ISD 51, comme renseigné dans une base de données interne.

Cette notification déclenche une réinitialisation de l'eSE 50, à savoir l'effacement de toute donnée, toute application et tout domaine de sécurité supplémentaire SSD qui ont pu être chargés, installés ou créés dans l'eSE. Seul le domaine de sécurité racine ISD 51 n'est pas effacé, car obligatoire dans l'eSE 50. L'ISD 51 conserve le ou les jeux de clés cryptographiques courants.

Cette étape 410 contribue à la sécurisation des données contenues dans l'eSE 50 car, par leur effacement, elles ne sont plus accessibles à une personne mal intentionnée.

La fin de la suppression des données/applications/SSD dans l'eSE 50 lors de l'étape 410 déclenche le passage automatique 415 de l'eSE 50 dans un état bloqué dans lequel les fonctionnalités de l'eSE sont réduites.

La norme GlobalPlatform définit notamment les états OP_READY, INITIALIZED, SECURED, CARD_LOCKED et TERMINATED comme états possibles pour l'eSE 50. L'état de l'eSE consiste en la mémorisation d'une information correspondante dans une mémoire non volatile de l'eSE.

L'étape 415 consiste ainsi à faire basculer l'eSE 50 de l'état courant (par exemple SECURED, ou OP_READY ou INITIALIZED) vers l'état CARD_LOCKED. La section 11 de la «GlobalPlatform Card Spécification 2.2.1 » montre notamment les commandes APDU qui ne sont plus traités dans cet état CARD_LOCKED de l'eSE. L'accès aux applications/services de l'eSE, exceptés les services eSE AUDIT et eSE unlock process, est ainsi bloqué jusqu'à un éventuel déblocage.

L'ISD 51 ayant par défaut le privilège Card Lock, il est à même d'effectuer cette bascule automatique à détection de la réinitialisation.

Suite à la réinitialisation, le dispositif hôte 100 redémarre (reboot) à l'étape 420.

Dans un mode de réalisation, le procédé passe directement à l'étape 440 décrite ci-après au cours de laquelle un message ou notification contenant un identifiant eSE-ID de l'eSE 50 est transmis à l'entité externe Fabricant initialement propriétaire de l'eSE. Dans ce mode de réalisation, aucune valeur aléatoire et cryptogramme n'est transmis et utilisé pour valider l'identité de l'Issuer courant. L'entité externe Fabricant initialement propriétaire de l'eSE procédera à la détermination de l'Issuer courant à l'aide des bases de données comme évoqué ci-dessous en lien avec les **Figures 7** à **10** (sans utilisation de cryptogramme). L'Issuer courant ainsi déterminé pourra entreprendre des actions à l'encontre de l'eSE (envoi de commandes par exemple) en passant par l'entité externe Fabricant sans qu'il n'y ait eu de validation de l'Issuer courant à l'aide d'un message chiffré ou d'une valeur aléatoire/cryptogramme comme décrit dans le mode de réalisation complet ci-dessous.

Dans le mode de réalisation complet tel qu'illustré par la **Figure 4****,** il est prévu, dans la séquence de démarrage (boot sequence) du dispositif hôte 100 pour le redémarrage, que l'agent applicatif du fabricant, Manufacturer Admin/Proxy Agent, intégré à l'OS génère une valeur aléatoire et la communique à l'eSE 50, notamment à l'ISD 51, car les mécanismes ACF l'y autorisent.

Cet envoi de la valeur aléatoire a donc lieu à chaque redémarrage du dispositif hôte 100, indépendamment de savoir si une réinitialisation de celui-ci a eu lieu avant ou non.

A l'étape 425, le domaine de sécurité racine ISD 51 récupère l'état courant de l'eSE 50 à l'aide d'une commande interne (lecture de l'information d'état dans la mémoire non volatile de l'eSE) et traite la valeur aléatoire reçue de façon différente selon l'état récupéré.

Si l'eSE 50 n'est pas dans l'état CARD_LOCKED, mais dans l'un des états OP_READY, INITIALIZED et SECURED, l'ISD 51 retourne à l'étape 430 un code prédéfini à l'agent applicatif Manufacturer Admin/Proxy Agent. La séquence de démarrage peut ainsi se poursuivre normalement.

Si l'eSE 50 est dans l'état CARD_LOCKED, l'ISD 51 calcule un cryptogramme à partir de la valeur aléatoire reçue et du jeu de clés cryptographiques associé à l'ISD 51. Puis il retourne le cryptogramme à l'agent applicatif requérant, le Manufacturer Admin/Proxy Agent, comme réponse à la valeur aléatoire reçue. Il s'agit de l'étape 435 sur la Figure.

Si plusieurs jeux de clés existent pour l'ISD 51, le cryptogramme calculé peut résulter de la concaténation de cryptogrammes élémentaires, chacun calculé à partir de la valeur aléatoire et de l'un des jeux de clés.

Un exemple de calcul de cryptogramme consiste à chiffrer la valeur aléatoire à l'aide d'une clé du jeu de clés, par exemple en utilisant un mécanisme d'encryptage RSA (Rivest Shamir Adleman) ou ECC (Elliptic Curve Cryptography).

En variante, l'étape 420 peut comprendre l'envoi d'un simple message/notification, sans inclure une valeur utilisée par la suite pour calculer un cryptogramme. Dans ce cas, l'étape 430 reste inchangée. En revanche, l'étape 435 va consister, pour l'eSE, à générer un message ou donnée chiffré, par exemple à chiffrer une donnée prédéterminée (également connue de l'Issuer courant pour permettre à ce dernier de mener des vérifications comme décrites par la suite).

De retour à l'exemple de la valeur aléatoire, à réception d'un cryptogramme, signifiant donc que l'eSE est dans un état CARD_LOCKED, l'agent applicatif Manufacturer Admin/Proxy Agent envoie à l'étape 440 une notification de réinitialisation usine à l'entité externe Fabricant initialement propriétaire de l'eSE. Plus précisément, cette notification est envoyée à un serveur de l'infrastructure du fabricant, noté serveur Fabricant. La notification inclut notamment un identifiant de l'eSE 50, par exemple l'identifiant eSE-ID défini par la norme GlobalPlatform et que l'agent applicatif peut récupérer à tout moment auprès de l'ISD 51.

L'information d'adressage de cette infrastructure Fabricant, par exemple une adresse IP, une adresse email, etc., est explicitement contenue dans le code (hardcodé) de l'agent applicatif Manufacturer Admin/Proxy Agent.

Dans un mode de réalisation préféré, la valeur aléatoire générée et ayant servi de base au calcul du cryptogramme est jointe dans la notification de réinitialisation. Cette disposition permet, comme cela ressort de la suite, de transmettre séparément la valeur aléatoire du cryptogramme, et ainsi accroître la sécurité relative aux mécanismes mis en oeuvre par le cryptogramme (authentification notamment).

Dans un mode de réalisation alternatif, la valeur aléatoire est transmise avec le cryptogramme.

Le serveur Fabricant, à réception de la notification, envoie (étape 445) une requête à l'agent applicatif Manufacturer Admin/Proxy Agent aux fins de récupérer le cryptogramme correspondant.

Ce que l'agent application lui renvoie à l'étape 450 en réponse à cette requête.

L'étape 455 qui suit a pour objectif d'identifier l'Issuer courant ou actuel de l'eSE 50 avec certitude et de lui transmettre la valeur aléatoire et le cryptogramme associé.

Différents modes de réalisation de cette étape sont maintenant envisagés en référence aux **Figures 7** à **10****.**

Dans le mode de réalisation de la **Figure 7****,** chaque Issuer qui cède ses droits d'administration sur l'eSE 50 renseigne, dans une base de données locale BD, l'Issuer suivant à qui il a cédé ses droits. Cette information est mémorisée en association avec l'eSE-ID.

Comme on le voit sur la figure, la chaîne des Issuers (de détention/propriété) consécutifs est conservée. Il est ainsi possible de déterminer l'Issuer courant en transmettant de proche en proche la valeur aléatoire et le cryptogramme jusqu'à l'Issuer courant. Ce dernier est celui qui n'a pas mémorisé d'Issuer suivant dans sa base de données pour l'eSE 50 considéré (eSE-ID). Ainsi chaque entité externe intermédiaire (Fabricant, Issuer#1, Issuer#2) recevant la valeur aléatoire et le cryptogramme les transmettent vers une entité externe destinataire renseignée, dans la BD locale, comme successeur à l'entité externe réceptrice dans la chaîne des Issuers.

Pratiquement, chaque entité externe recevant la notification de réinitialisation (incluant la valeur aléatoire) et le cryptogramme (en commençant par le serveur Fabricant) détermine si un transfert des droits d'administrateur (du jeu de clés) sur l'eSE 50 a eu lieu en consultant sa BD locale à une entrée correspondant à l'eSE-ID. Cette consultation consiste à vérifier si l'identifiant d'une autre entité externe est indiquée dans cette entrée.

Dans l'affirmative, la notification de réinitialisation (incluant la valeur aléatoire) et le cryptogramme sont transmis (étape 4555) à l'autre entité externe telle qu'indiquée dans la BD locale.

Dans la négative, le serveur de l'entité externe courante essaye de décrypter le cryptogramme à l'aide du jeu de clés qu'il possède pour l'eSE 50 identifié par l'eSE-ID de la notification de réinitialisation. C'est l'étape 4556.

Si le décryptage 4556 permet de retrouver la valeur aléatoire, alors l'eSE 50 a bien été authentifié et l'entité externe courante est bien l'Issuer courant disposant des droits d'administration sur l'eSE 50. Dans ce cas, le procédé passe à l'étape 460 réalisée par l'Issuer courant et consistant à effectuer des actions particulières.

Si le décryptage 4553 se révèle être négatif, alors le procédé passe à l'étape 465 réalisée par l'Issuer courant et consistant par exemple à effectuer des actions sécuritaires.

Dans un mode de réalisation l'étape 460 comprend tout d'abord une étape 4601 au cours de laquelle l'Issuer courant contacte l'utilisateur du dispositif hôte via un canal de communication sur (par exemple adresse email, téléphone mobile, téléphone fixe) pour s'enquérir d'un statut du dispositif, par exemple, « perdu », « volé », « vendu », etc.

Puis en fonction dudit statut obtenu, des actions différentes peuvent être entreprises.

Ainsi à l'étape 4602, si le statut obtenu est « perdu » ou « volé », l'Issuer courant émet, à destination de l'eSE 50, une commande de modification de l'état interne de l'eSE de l'état « CARD_LOCKED » à l'état de fin de vie « TERMINATED » dans lequel les fonctionnalités et interfaces de communication de l'eSE sont détruites, la commande de modification étant cryptée à l'aide du jeu de clés associée à l'ISD 51 pour des raisons de sécurité. En effet, les mécanismes de sécurité entourant les éléments sécurisés intégrés eSE de GlobalPlatform implique l'authentification et le chiffrement de l'ensemble des actions exécutées entre un tel serveur externe distant et l'ISD.

L'état de fin de vie « TERMINATED » signifie la fin du cycle de vie de l'eSE et est un état irréversible.

La commande de modification peut consister en une action destructive à l'intérieur de l'eSE, par exemple en l'effacement de toute la mémoire (volatile et non volatile) de l'eSE ou la destruction d'un fusible dans la couche matériel de l'eSE.

Pour communiquer avec l'eSE, l'Issuer courant transmet la commande cryptée à l'Issuer initial qui lui a transmis le cryptogramme, c'est-à-dire le Fabricant dans l'exemple. Puis c'est le serveur Fabricant qui transmet cette commande à l'ISD 51 via l'agent applicatif Manufacturer Admin/Proxy Agent.

Par contre, à l'étape 4603, si le statut obtenu est « vendu », ou à tout le moins n'est ni « perdu » ni « volé », l'Issuer courant émet également, à destination de l'eSE 50, une commande cryptée de modification de l'état interne de l'eSE pour son déblocage, notamment en passant de l'état « CARD_LOCKED » à l'état débloqué « SECURED », ce qui permet de récupérer l'ensemble des fonctionnalités de l'eSE. Le même chemin de transmission de cette commande via le serveur Fabricant et l'agent applicatif Manufacturer Admin/Proxy Agent est utilisé.

De façon optionnelle après les étapes 4602 et 4603, l'Issuer courant peut informer les autres entités externes partenaires (Entité1 et Entité2 dans l'exemple) qui avaient des informations/données dans l'eSE 50 avant la notification, des actions réalisées et notamment du déblocage ou de la destruction de l'eSE. Ainsi, ces autres entités externes partenaires peuvent engager à nouveau des procédures visant à recharger des données utilisateurs dans l'eSE et le dispositif hôte en cas de déblocage de l'eSE, ou mettre l'eSE et le dispositif hôte dans une liste noire (blacklist) en cas de destruction de l'eSE. Il s'agit de l'étape 4604 sur la Figure. Cette étape optionnelle n'est pas mise en oeuvre dans le cas d'un dispositif hôte « vendu ».

Ainsi, la commande de modification d'état de l'eSE, transmise par l'Issuer courant, peut être incluse dans un message comprenant également une information précisant si des informations/données doivent être restaurées dans l'eSE ou non (si l'utilisateur de l'eSE a changé suite à une vente par exemple).

L'étape 460 se termine après la sous-étape 4604.

Dans un mode de réalisation, l'étape 465 (échec de l'authentification de l'eSE) comprend l'incrémentation d'un compteur d'échec d'authentification de l'eSE considéré (étape 4651). Un compteur est donc prévu pour chaque eSE-ID.

Ce compteur est comparé à une valeur seuil à l'étape 4652 afin de détecter d'éventuels déni de service par l'usage d'un faux eSE. Par exemple la valeur seuil est fixée à 10.

Si la valeur seuil n'est pas dépassée, l'étape 465 se termine.

Sinon, un déni de service est détecté. L'étape 4653 consiste alors à réaliser des actions protectrices en réponse à ce déni de service. Par exemple, l'eSE peut être ajouté à une liste noire (blacklist) diffusée auprès des entités externes afin de ne plus traiter aucun message ou notification associé à cet eSE. Puis l'étape 465 se termine.

La **Figure 4a** illustre les échanges de messages entre les divers intervenants mis en oeuvre dans des étapes de la **Figure 4****.** A noter que ces échanges évoquent uniquement le déblocage de l'eSE après authentification par l'Issuer courante.

On remarquera que l'étape 4555 est composée d'une première sous-étape de transmission de la notification de réinitialisation (incluant la valeur aléatoire) à l'Issuer courant, puis une deuxième sous-étape où l'Issuer courant demande la cryptogramme auprès du serveur Fabricant, et enfin une troisième sous-étape au cours de laquelle le cryptogramme est envoyé à l'Issuer courant. Comme indiqué plus haut, cette réalisation permet de séparer l'envoi de la valeur aléatoire et du cryptogramme, de sorte à accroître la sécurité relative à l'utilisation du cryptogramme (par exemple pour l'authentification).

La **Figure 8** illustre une variante à la **Figure 7****.** Dans ce mode de réalisation, un serveur central est prévu auquel chaque Issuer qui cède ses droits communique l'identité du nouvel Issuer à qui il a cédé ses droits d'administration sur l'eSE. Ainsi le serveur central peut mémoriser, dans une base BD locale, l'ensemble de la chaîne des Issuers successifs, ou à tout le moins mémoriser le dernier Issuer, c'est-à-dire l'Issuer courant.

A noter que toute cession telle qu'indiquée par un ancien Issuer au serveur central peut être confirmée par le nouvel Issuer avant mémorisation dans la BD.

Dans ce mode de réalisation, l'identification de l'Issuer courant comprend l'émission (étape 4550') d'une requête par le serveur Fabricant au serveur central, aux fins d'obtenir un identifiant de l'Issuer courant tel que mémorisé dans la BD locale au serveur central. La requête inclut notamment l'identifiant eSE-ID de l'eSE 50.

En réponse, le serveur central renvoie (étape 4551') un identifiant ou une adresse de l'Issuer courant tel que mémorisé dans la BD locale.

Puis, le serveur Fabricant transmet la notification de réinitialisation (incluant la valeur aléatoire) et le cryptogramme (étape 4555 comme décrite précédemment) à l'Issuer courant indiqué dans la réponse (s'il est différent du Fabricant lui-même). S'ensuit l'étape 4556 de décryptage du cryptogramme par l'Issuer courant comme décrit précédemment.

La **Figure 9** illustre une autre variante à la **Figure 7****,** se reposant toujours sur le serveur central.

Dans ce mode de réalisation, l'identification de l'Issuer courant comprend la transmission (étape 4550") de la notification de réinitialisation par le serveur Fabricant au serveur central.

A réception, le serveur central détermine (étape 4551") l'Issuer courant tel que mémorisé dans la BD locale. Il contacte alors cet Issuer courant en lui retransmettant la notification de réinitialisation telle que reçue accompagnée d'un identifiant ou d'une adresse du serveur Fabricant à l'origine de la notification (étape 4552"), en utilisant par exemple une adresse de l'Issuer courant stockée dans la BD locale.

A l'étape 4553", l'Issuer courant se connecte au serveur Fabricant afin de récupérer (étape 4555 précédemment décrite) le cryptogramme et éventuellement la valeur aléatoire si non incluse dans la notification retransmise. S'ensuit l'étape 4556 de décryptage du cryptogramme par l'Issuer courant comme décrit précédemment.

Dans les modes de réalisation des Figures 8 et 9, le serveur Fabricant peut, avant de solliciter le serveur central, déterminer s'il n'est pas lui-même l'Issuer courant. Cette information est facilement accessible puisqu'elle consiste à savoir s'il a lui-même informé le serveur central d'un quelconque transfert de droits d'administration sur l'eSE considéré. Ainsi, la sollicitation du serveur central est évitée si aucun transfert n'a eu lieu.

La **Figure 10** illustre une autre variante à la **Figure 7****.** Dans ce mode de réalisation, l'identité de l'Issuer courant est mémorisée dans un champ BD de données dédié en mémoire de l'eSE à chaque transfert des droits d'administration, c'est-à-dire à chaque transfert du jeu de clés associé à l'ISD 51. Par exemple, le serveur de l'Issuer cédant ses droits peut envoyer une commande pour mettre à jour ce champ avec un identifiant du nouvel Issuer.

A l'origine, ce champ inclut un identifiant du serveur Fabricant dans l'exemple pris ci-dessus.

Dans ce mode de réalisation, l'agent applicatif Manufacturer Admin/Proxy Agent récupère cette information d'Issuer courant en sollicitant l'ISD 51. Par exemple cette récupération peut avoir lieu lors d'une étape 437 successive à l'étape 435 décrite précédemment.

Dans ce cas, la notification envoyée à l'étape 440 inclut également cette information d'Issuer courant.

L'étape 455 consiste alors à ce que le serveur Fabricant ayant reçu cette notification contacte directement l'Issuer courant pour lui transmettre la notification de réinitialisation (incluant la valeur aléatoire) et le cryptogramme (étape 4555 précédemment décrite). S'ensuit l'étape 4556 de décryptage du cryptogramme par l'Issuer courant comme décrit précédemment.

A noter que pendant l'utilisation du dispositif hôte 100 intégrant l'eSE 50, l'utilisateur peut intentionnellement supprimer l'Admin/Proxy Agent de l'Issuer courant. Cette suppression n'entraîne pas nécessairement de risque de sécurité sur l'eSE.

Toutefois, dans un mode de réalisation il est prévu que l'Issuer courant est notifié de cette suppression, soit par l'OS du dispositif hôte 100, soit par l'Admin/Proxy Agent en cours de suppression. Dans une variante, l'Issuer courant peut être informé de cette suppression par une plateforme de téléchargement (ou un serveur) propre à son infrastructure, cette plateforme contactant périodiquement l'Admin/Proxy Agent de l'eSE pour s'assurer du bon fonctionnement de cet agent applicatif. Ainsi en l'absence de réponse, la plateforme est informée de la suppression ou de la corruption de l'Admin/Proxy Agent.

A détection de cette suppression/corruption, l'Issuer courant peut inviter, par message, l'utilisateur final à recharger et réinstaller l'Admin/Proxy Agent.

A noter également que lorsque plusieurs co-Issuers se partagent l'ISD 51, ce qui a été exposé ci-dessus peut être effectué à l'encontre d'un premier co-Issuer courant, avant de passer à un co-Issuer suivant en cas d'échec.

Notamment, tous les co-Issuers ont les mêmes droits sur l'ISD 51 et peuvent donc débloquer ou détruire l'eSE 50. Ainsi dans un mode de réalisation, lorsqu'un déblocage ou une destruction est effectuée à l'initiative d'un co-Issuer courant, les autres co-Issuers courants sont avertis. En variante, le déblocage ou la destruction effective de l'eSE peut n'être opérée que lorsque l'ensemble ou une quote-part prédéfinie des co-Issuers a envoyé la même commande de modification d'état de l'eSE.

Une partie au moins du procédé selon l'invention peut être mis en oeuvre de façon logicielle. Ainsi, la présente invention peut prendre la forme d'éléments entièrement logiciels (incluant des micrologiciels, des logiciels résidents, des micro-codes, etc.) ou la forme d'éléments combinant des éléments logiciels et matériels.

Les exemples qui précèdent ne sont que des modes de réalisation de l'invention qui ne s'y limite pas.

## Revendications

1. Procédé de gestion d'un élément sécurisé intégré (50), eSE, dans un dispositif hôte (100), l'élément sécurisé intégré (50) étant uniquement accessible comme esclave d'au moins une application résidente (App1, App2, App3) du dispositif hôte dans une relation maître-esclave, et l'élément sécurisé intégré (50) incluant un domaine de sécurité racine (51), ISD, auquel est associé un jeu de clés pour mettre en oeuvre des mécanismes de sécurité, le procédé étant **caractérisé par** les étapes suivantes :
transmettre (440, 450) un message incluant un identifiant de l'élément sécurisé intégré eSE (50), depuis un agent applicatif intégré à un système d'exploitation (OS) du dispositif hôte à destination d'une première entité externe au dispositif hôte et renseignée dans l'agent applicatif ;
déterminer une deuxième entité externe au dispositif hôte détentrice du jeu de clés associé au domaine de sécurité racine (51).

2. Procédé selon la revendication 1, comprenant en outre :
transmettre (455, 4555) le message reçu depuis la première entité externe à destination de la deuxième entité externe déterminée;
vérifier (4556) par ladite deuxième entité externe que celle-ci est détentrice du jeu de clés associé au domaine de sécurité racine (51) à partir du message reçu.

3. Procédé selon la revendication 2, dans lequel transmettre (455) le message vers la deuxième entité externe est effectué de proche en proche, une entité externe recevant ledit message le transmettant (4555) vers une entité externe destinataire renseignée, dans une base de données (BD) locale à l'entité externe réceptrice, comme successeur à l'entité externe réceptrice dans la détention du jeu de clés associé audit domaine de sécurité racine.

4. Procédé selon la revendication 2, dans lequel déterminer une deuxième entité externe comprend :
émettre (4550'), par la première entité externe, une requête à un serveur central pour obtenir un identifiant de la deuxième entité externe, la requête identifiant l'élément sécurisé intégré (50).

5. Procédé selon la revendication 2, dans lequel déterminer une deuxième entité externe et transmettre (455) le message reçu vers la deuxième entité externe comprennent :
émettre (4550") une notification par la première entité externe à un serveur central, ladite notification identifiant l'élément sécurisé intégré (50) ;
au niveau du serveur central, identifier (4551 ") localement la deuxième entité externe à partir de l'identifiant (eSE-ID) de l'élément sécurisé intégré (50) indiqué dans la notification, et émettre (4552") une deuxième notification à la deuxième entité externe telle qu'identifiée localement ;
à l'initiative de la deuxième entité externe telle qu'identifiée localement, établir (4553") une connexion entre cette deuxième entité externe et la première entité externe de sorte à recevoir (4555) de cette dernière ledit message.

6. Procédé selon la revendication 2, dans lequel l'élément sécurisé intégré (50) comprend, en mémoire, un champ de données (BD) pour mémoriser l'identification d'une entité externe détentrice du jeu de clés associé audit domaine de sécurité racine (51), ledit champ de données étant mis à jour lorsque l'entité externe détentrice du jeu de clés change, et
l'agent applicatif récupère (437) l'identification d'entité externe indiquée dans le champ de données de l'élément sécurisé intégré (50) et transmet (440) cette identification à la première entité externe de sorte que cette dernière établit une connexion avec la deuxième entité externe à l'aide de cette identification pour lui transmettre (4555) ledit message.

7. Procédé selon l'une des revendications 2 à 6, comprenant les étapes suivantes, au niveau de l'agent applicatif intégré au système d'exploitation (OS) du dispositif hôte :
transmettre (420), au domaine de sécurité racine ISD (51) de l'élément sécurisé intégré eSE (50), un premier message généré par l'agent applicatif ;
en réponse, recevoir (435) un message chiffré par au moins une clé du jeu de clés associé au domaine de sécurité racine (51) ;
procédé dans lequel les messages transmis aux première et deuxième entités externes incluent le message chiffré, et la vérification par la deuxième entité externe est effectuée à partir du message chiffré reçu et d'au moins une clé mémorisée dans la deuxième entité externe.

8. Procédé selon la revendication 7, comprenant une étape préalable (405) de réinitialisation du dispositif hôte (100), et dans lequel l'étape de transmission (420) du premier message au domaine de sécurité racine (51) par l'agent applicatif est déclenchée au redémarrage du dispositif hôte consécutivement à la réinitialisation.

9. Procédé selon la revendication 8, dans lequel la réinitialisation du dispositif hôte (100) déclenche une réinitialisation de l'élément sécurisé intégré (50) par l'envoi (410) d'une commande appropriée par le système d'exploitation du dispositif hôte.

10. Procédé selon la revendication 9, dans lequel la réinitialisation de l'élément sécurisé intégré (50) comprend le passage (415) automatique de celui-ci dans un état bloqué dans lequel les fonctionnalités de l'élément sécurisé intégré sont réduites.

11. Procédé selon l'une des revendications 7 à 10, dans lequel le premier message transmis par l'agent applicatif inclut une valeur aléatoire générée par l'agent applicatif, le message chiffré inclut un cryptogramme correspondant à la valeur aléatoire chiffrée par l'élément sécurisé intégré (50) à l'aide d'au moins une clé du jeu de clés associé au domaine de sécurité racine (51), et les messages transmis aux première et deuxième entités externes incluent la valeur aléatoire générée et le cryptogramme correspondant.

12. Procédé selon l'une des revendications 7 à 11, comprenant en outre, au niveau de la deuxième entité externe : authentifier (4556) l'élément sécurisé intégré à l'aide du message chiffré et des clés en possession ; et en cas d'échec d'authentification pour une pluralité de messages chiffrés émis pas l'élément sécurisé intégré, exécuter (4653) au moins une action protectrice.

13. Procédé selon l'une des revendications 7 à 12, dans lequel le domaine de sécurité racine (51) comprend une pluralité de jeux de clés détenus par une pluralité respective d'entités externes, et le message chiffré résulte de la concaténation d'une donnée chiffrée par chacun des jeux de clés du domaine de sécurité racine.

14. Procédé selon l'une des revendications 2 à 13, dans lequel, lorsque la vérification est positive, la deuxième entité externe envoie (4602, 4603), à l'élément sécurisé intégré (50), une commande de modification d'un état interne à l'élément sécurisé intégré, via la première entité externe et l'agent applicatif.

15. Procédé selon la revendication 14, dans lequel la deuxième entité externe obtient (4601) un statut du dispositif hôte (100), et la commande de modification d'un état interne à l'élément sécurisé intégré (50) est fonction dudit statut obtenu.

16. Procédé selon l'une des revendications 1 à 15, comprenant les étapes suivantes :
installer, dans le dispositif hôte, un deuxième agent applicatif différent de l'agent applicatif intégré, le deuxième agent applicatif étant configuré pour se connecter à la deuxième entité externe ;
supprimer le deuxième agent applicatif du dispositif hôte par un utilisateur; et
notifier la suppression du deuxième agent applicatif à la deuxième entité externe par le système d'exploitation du dispositif hôte.

17. Système de gestion d'un élément sécurisé intégré (50), eSE, dans un dispositif hôte (100), l'élément sécurisé intégré (50) étant uniquement accessible comme esclave d'au moins une application résidente (App1, App2, App3) du dispositif hôte dans une relation maître-esclave, et l'élément sécurisé intégré (50) incluant un domaine de sécurité racine (51), ISD, auquel est associé un jeu de clés pour mettre en oeuvre des mécanismes de sécurité, le système étant **caractérisé par** :
un agent applicatif intégré à un système d'exploitation (OS) du dispositif hôte et configuré pour transmettre un message incluant un identifiant de l'élément sécurisé intégré eSE, à destination d'une première entité externe au dispositif hôte et renseignée dans l'agent applicatif ; et
la première entité externe au dispositif hôte telle que renseignée dans l'agent applicatif, et configurée pour déterminer une deuxième entité externe au dispositif hôte détentrice du jeu de clés associé au domaine de sécurité racine.

## Patentansprüche

1. Verfahren zur Verwaltung eines integrierten gesicherten Elements (50), eSE, in einer Hostvorrichtung (100), wobei das integrierte gesicherte Element (50) nur als Slave mindestens einer residenten Anwendung (Appl, App2, App3) der Hostvorrichtung in einer Master-Slave-Beziehung erreichbar ist, und wobei das integrierte gesicherte Element (50) eine Wurzel-Sicherheitsdomäne (51), ISD, enthält, mit der ein Schlüsselsatz verbunden ist, um Sicherheitsmechanismen umzusetzen, wobei das Verfahren durch die folgenden Schritte gekennzeichnet ist:
Übertragen (440, 450) einer Nachricht, die eine Kennung des integrierten gesicherten Elements eSE (50) enthält, von einem Anwendungsagenten, der in ein Betriebssystem (OS) der Hostvorrichtung integriert ist, an eine erste Einheit, die außerhalb der Hostvorrichtung gelegen ist und in dem Anwendungsagenten erfasst ist;
Ermitteln einer zweiten Einheit, die außerhalb der Hostvorrichtung gelegen ist, die den Schlüsselsatz besitzt, der mit der Wurzel-Sicherheitsdomäne (51) verbunden ist.

2. Verfahren nach Anspruch 1, ferner umfassend:
Übertragen (455, 4555) der empfangenen Nachricht von der ersten außerhalb gelegenen Einheit an die ermittelte zweite außerhalb gelegene Einheit;
Prüfen (4556) durch die zweite außerhalb gelegene Einheit, dass diese den Schlüsselsatz besitzt, der mit der Wurzel-Sicherheitsdomäne (51) verbunden ist, anhand der empfangenen Nachricht.

3. Verfahren nach Anspruch 2, wobei das Übertragen (455) der Nachricht an die zweite außerhalb gelegene Einheit nach und nach durchgeführt wird, wobei eine außerhalb gelegene Einheit die Nachricht empfängt und sie an eine außerhalb gelegene Zieleinheit überträgt (4555), die in einer lokalen Datenbank (DB) der empfangenden außerhalb gelegenen Einheit als Nachfolger der empfangenden außerhalb gelegenen Einheit in dem Besitz des Schlüsselsatzes, der mit der Wurzel-Sicherheitsdomäne verbunden ist, erfasst ist.

4. Verfahren nach Anspruch 2, wobei das Ermitteln einer zweiten außerhalb gelegenen Einheit Folgendes umfasst:
Senden (4550'), durch die erste außerhalb gelegene Einheit, einer Anfrage an einen Zentralserver, um eine Kennung der zweiten außerhalb gelegenen Einheit zu erhalten, wobei die Anfrage das integrierte gesicherte Element (50) identifiziert.

5. Verfahren nach Anspruch 2, wobei das Ermitteln einer zweiten außerhalb gelegenen Einheit und das Übertragen (455) der empfangenen Nachricht an die zweite außerhalb gelegene Einheit Folgendes umfassen:
Senden (4550") einer Benachrichtigung durch die erste außerhalb gelegene Einheit an einen Zentralserver, wobei die Benachrichtigung das integrierte gesicherte Element (50) identifiziert;
an dem Zentralserver, lokales Identifizieren (4551'') der zweiten außerhalb gelegenen Einheit anhand der Kennung (eSE-ID) des integrierten gesicherten Elements (50), die in der Benachrichtigung angegeben ist, und Senden (4552") einer zweiten Benachrichtigung an die zweite außerhalb gelegene Einheit, wie sie lokal identifiziert wurde;
auf Initiative der zweiten außerhalb gelegenen Einheit, wie sie lokal identifiziert wurde, Herstellen (4553") einer Verbindung zwischen dieser zweiten außerhalb gelegenen Einheit und der ersten außerhalb gelegenen Einheit, um von letzterer die Nachricht zu empfangen (4555) .

6. Verfahren nach Anspruch 2, wobei das integrierte gesicherte Element (50) im Speicher ein Datenfeld (DB) umfasst, um die Identifikation einer außerhalb gelegenen Einheit, die den Schlüsselsatz besitzt, der mit der Wurzel-Sicherheitsdomäne (51) verbunden ist, zu speichern, wobei das Datenfeld aktualisiert wird, wenn sich die außerhalb gelegene Einheit, die den Schlüsselsatz besitzt, ändert, und
der Anwendungsagent die Identifikation der außerhalb gelegenen Einheit, die in dem Datenfeld des integrierten gesicherten Elements (50) angegeben ist, wiedererlangt (437), und diese Identifikation an die erste außerhalb gelegene Einheit überträgt (440), so dass diese mithilfe dieser Identifikation eine Verbindung mit der zweiten außerhalb gelegenen Einheit herstellt, um die Nachricht an sie zu übertragen (4555).

7. Verfahren nach einem der Ansprüche 2 bis 6, umfassend die folgenden Schritte bei dem Anwendungsagenten, der in das Betriebssystem (OS) der Hostvorrichtung integriert ist:
Übertragen (420) einer ersten Nachricht, die von dem Anwendungsagenten erzeugt wird, an die Wurzel-Sicherheitsdomäne ISD (51) des integrierten gesicherten Elements eSE (50);
daraufhin, Empfangen (435) einer Nachricht, die durch mindestens einen Schlüssel des Schlüsselsatzes, der mit der Wurzel-Sicherheitsdomäne (51) verbunden ist, verschlüsselt ist;
Verfahren, wobei die Nachrichten, die an die erste und die zweite außerhalb gelegene Einheit übertragen werden, die verschlüsselte Nachricht enthalten, und die Prüfung durch die zweite außerhalb gelegene Einheit anhand der empfangenen verschlüsselten Nachricht und mindestens eines Schlüssels, der in der zweiten außerhalb gelegenen Einheit gespeichert ist, durchgeführt wird.

8. Verfahren nach Anspruch 7, umfassend einen vorigen Schritt (405) des Zurücksetzens der Hostvorrichtung (100), und wobei der Schritt des Übertragens (420) der ersten Nachricht an die Wurzel-Sicherheitsdomäne (51) durch den Anwendungsagenten beim Neustart der Hostvorrichtung im Anschluss an das Zurücksetzen ausgelöst wird.

9. Verfahren nach Anspruch 8, wobei das Zurücksetzen der Hostvorrichtung (100) ein Zurücksetzen des integrierten gesicherten Elements (50) durch die Sendung (410) eines geeigneten Befehls durch das Betriebssystem der Hostvorrichtung auslöst.

10. Verfahren nach Anspruch 9, wobei das Zurücksetzen des integrierten gesicherten Elements (50) den automatischen Wechsel (415) desselben in einen gesperrten Zustand umfasst, wobei die Funktionalitäten des integrierten gesicherten Elements reduziert sind.

11. Verfahren nach einem der Ansprüche 7 bis 10, wobei die erste Nachricht, die von dem Anwendungsagenten übertragen wird, einen Zufallswert enthält, der von dem Anwendungsagenten erzeugt wird, die verschlüsselte Nachricht ein Kryptogramm enthält, das dem Zufallswert entspricht, der von dem integrierten gesicherten Element (50) mithilfe mindestens eines Schlüssels des Schlüsselsatzes, der mit der Wurzel-Sicherheitsdomäne (51) verbunden ist, verschlüsselt wird, und die Nachrichten, die an die erste und die zweite außerhalb gelegene Einheit übertragen werden, den erzeugten Zufallswert und das entsprechende Kryptogramm enthalten.

12. Verfahren nach einem der Ansprüche 7 bis 11, ferner umfassend, bei der zweiten außerhalb gelegenen Einheit: Authentifizieren (4556) des integrierten gesicherten Elements mithilfe der verschlüsselten Nachricht und im Besitz befindlicher Schlüssel; und, bei nicht erfolgreicher Authentifizierung für eine Vielzahl verschlüsselter Nachrichten, die von dem integrierten gesicherten Element gesendet werden, Durchführen (4653) mindestens einer Schutzaktion.

13. Verfahren nach einem der Ansprüche 7 bis 12, wobei die Wurzel-Sicherheitsdomäne (51) mehrere Schlüsselsätze umfasst, die sich im Besitz einer entsprechenden Vielzahl außerhalb gelegener Einheiten befinden, und die verschlüsselte Nachricht aus der Verknüpfung einer Angabe resultiert, die von jedem der Schlüsselsätze der Wurzel-Sicherheitsdomäne verschlüsselt ist.

14. Verfahren nach einem der Ansprüche 2 bis 13, wobei, wenn die Prüfung positiv ausfällt, die zweite außerhalb gelegene Einheit über die erste außerhalb gelegene Einheit und den Anwendungsagenten einen Befehl zur Änderung eines internen Zustands des integrierten gesicherten Elements an das integrierte gesicherte Element (50) sendet (4602, 4603).

15. Verfahren nach Anspruch 14, wobei die zweite außerhalb gelegene Einheit einen Status der Hostvorrichtung (100) erhält (4601) und der Befehl zur Änderung eines internen Zustands des integrierten gesicherten Elements (50) von dem erhaltenen Status abhängt.

16. Verfahren nach einem der Ansprüche 1 bis 15, umfassend die folgenden Schritte:
Installieren, in der Hostvorrichtung, eines zweiten Anwendungsagenten, der sich von dem integrierten Anwendungsagenten unterscheidet, wobei der zweite Anwendungsagent ausgelegt ist, sich mit der zweiten außerhalb gelegenen Einheit zu verbinden;
Löschen des zweiten Anwendungsagenten von der Hostvorrichtung durch einen Benutzer; und
Benachrichtigen der zweiten außerhalb gelegenen Einheit über die Löschung des zweiten Anwendungsagenten durch das Betriebssystem der Hostvorrichtung.

17. System zur Verwaltung eines integrierten gesicherten Elements (50), eSE, in einer Hostvorrichtung (100), wobei das integrierte gesicherte Element (50) nur als Slave mindestens einer residenten Anwendung (Appl, App2, App3) der Hostvorrichtung in einer Master-Slave-Beziehung erreichbar ist, und wobei das integrierte gesicherte Element (50) eine Wurzel-Sicherheitsdomäne (51), ISD, enthält, mit der ein Schlüsselsatz verbunden ist, um Sicherheitsmechanismen umzusetzen, wobei das System durch Folgendes gekennzeichnet ist:
einen Anwendungsagenten, der in ein Betriebssystem (OS) der Hostvorrichtung integriert ist und ausgelegt ist, eine Nachricht, die eine Kennung des integrierten gesicherten Elements eSE enthält, an eine erste Einheit zu übertragen, die außerhalb der Hostvorrichtung gelegen ist und in dem Anwendungsagenten erfasst ist; und
die erste Einheit, die außerhalb der Hostvorrichtung gelegen ist, wie sie in dem Anwendungsagenten erfasst ist, und die ausgelegt ist, eine zweite Einheit zu ermitteln, die außerhalb der Hostvorrichtung gelegen ist, die den Schlüsselsatz besitzt, der mit der Wurzel-Sicherheitsdomäne verbunden ist.

## Claims

1. A method for managing an embedded secure element (50), eSE, in a host device (100), the embedded secure element (50) only being accessible as a slave of at least one resident application (Appl, App2, App3) of the host device in a master-slave relationship, and the embedded secure element (50) including a root security domain (51), ISD, with which a set of keys is associated to implement security mechanisms, the method being **characterised by** the following steps:
sending (440, 450) a message including an identifier of the embedded secure element eSE (50), from an application agent embedded in an operating system (OS) of the host device to a first entity external to the host device and specified in the application agent;
determining a second entity external to the host device and holding the set of keys associated with the root security domain (51).

2. The method according to claim 1, further comprising:
sending (455, 4555) the received message from the first external entity to the determined second external entity;
verifying (4556) by said second external entity that the latter holds the set of keys associated with the root security domain (51) from the received message.

3. The method according to claim 2, wherein the message is sent (455) to the second external entity from entity to entity, one external entity receiving the message sending (4555) it to a receiving external entity specified in a local database (BD) of the receiving external entity as the successor to the receiving external entity in the holding of the set of keys associated with said root security domain.

4. The method according to claim 2, wherein determining a second external entity comprises:
sending (4550'), by the first external entity, a request to a central server to obtain an identifier of the second external entity, the request identifying the embedded secure element (50).

5. The method according to claim 2, wherein determining a second external entity and sending (455) the received message to the second external entity comprise:
sending (4550") a notification by the first external entity to a central server, said notification identifying the embedded secure element (50);
at the central server, locally identifying (4551") the second external entity from the identifier (eSe-ID) of the embedded secure element (50) indicated in the notification, and sending (4552") a second notification to the second external entity as locally identified;
at the initiative of the second external entity as locally identified, establishing (4553") a connection between that second external entity and the first external entity so as to receive (4555) said message from the latter.

6. The method according to claim 2, wherein the embedded secure element (50) comprises, in memory, a data field (BD) to store the identification of an external entity holding the set of keys associated with said root security domain (51), said data field being updated when the external entity holding the set of keys changes, and
the application agent recovers (437) the external entity identification indicated in the data field of the embedded secure element (50) and sends (440) that identification to the first external entity such that the latter establishes a connection with the second external entity using that identifier to send (4555) it said message.

7. The method according to one of claims 2 to 6, comprising the following steps, in the application agent embedded in the operating system (OS) of the host device:
sending (420) the root security domain ISD (51) of the embedded secure element eSE (50) a first message generated by the application agent;
in response, receiving (435) a message encrypted by at least one key from the set of keys associated with the root security domain (51);
in which method the messages sent to the first and second external entities include the encrypted message, and the verification by the second external entity is done from the received encrypted message and at least one key stored in the second external entity.

8. The method according to claim 7, comprising a prior step (405) for resetting the host device (100), and in which the step for sending (420) the first message to the root security domain (51) by the application agent is triggered upon restarting the host device following the reset.

9. The method according to claim 8, wherein resetting the host device (100) triggers a reset of the embedded secure element (50) by sending (410) a suitable command by the operating system of the host device.

10. The method according to claim 9, wherein the resetting of the embedded secure element (50) comprises the automatic switching (415) thereof into a locked state in which the functionalities of the embedded secure element are reduced.

11. The method according to one of claims 7 to 10, wherein the first message sent by the application agent includes a random value generated by the application agent, the encrypted message includes a cryptogram corresponding to the random value encrypted by the embedded secure element (50) using at least one key from the set of keys associated with the root security domain (51), and the messages sent to the first and second external entities include the generated random value and the corresponding cryptogram.

12. The method according to one of claims 7 to 11, further comprising, at the second external entity: authenticating (4556) the embedded secure element using the encrypted message and the hold keys; and in case of unsuccessful authentication for multiple encrypted messages sent by the embedded secure element, executing (4653) at least one protective action.

13. The method according to one of claims 7 to 12, wherein the root security domain (51) comprises multiple sets of keys hold by respective multiple external entities, and the encrypted message results from the concatenation of a datum encrypted by each of the sets of keys of the root security domain.

14. The method according to one claims 2 to 13, wherein, when the verification is positive, the second external entity sends (4602, 4603) the embedded secure element (50) a command to modify an internal state of the embedded secure element, via the first external entity and the application agent.

15. The method according to claim 14, wherein the second external entity obtains (4601) a status of the host device (100), and the modification command of an internal state of the embedded secure element (50) depends on the obtained state.

16. The method according to one of claims 1 to 15, comprising the following steps:
installing a second application agent in the host device that is different from the embedded application agent, the second application agent being configured to connect to the second external entity;
deleting the second application agent from the host device by a user; and
notifying the deletion of the second application agent to the second external entity using the operating system of the host device.

17. A management system for an embedded secure element (50), eSE, in a host device (100), the embedded secure element (50) only being accessible as a slave of at least one resident application (Appl, App2, App3) of the host device in a master-slave relationship, and the embedded secure element (50) including a root security domain (51), ISD, with which a set of keys is associated to implement security mechanisms, the system being **characterised by**:
an application agent embedded in an operating system (OS) of the host device and configured to send a message including an identifier of the embedded secure element eSE, to a first entity external to the host device and specified in the application agent; and
the first entity external to the host device as specified in the application agent, and configured to determine a second entity external to the host device holding the set of keys associated with the root security domain.
